# EUROPÄISCHE PATENTANMELDUNG

(11) **EP 4 552 483 A1**
(43) Veröffentlichungstag der Anmeldung: **14.05.2025**
(21) Anmeldenummer: 24203084.9
(22) Anmeldetag: 27.09.2024
(51) Int. Cl.: A01K 1/02

(54) **ANORDNUNG FÜR EINE ABFERKELBUCHT UND BETREFFENDE ABFERKELBUCHT**

(30) Priorität: 08.11.2023 LU 505453
(71) Anmelder: Big Dutchman International GmbH, 49377 Vechta (DE)
(72) Erfinder: WICHMANN, Rolf, 49377 Vechta (DE)
(74) Vertreter: Eisenführ Speiser

(57) **Zusammenfassung**

Die Erfindung betrifft eine Anordnung (2), insbesondere eine Ferkelschlupfeinrichtung (2), für mindestens eine Abferkelbucht (100).

Erfindungsgemäß wird vorgeschlagen, dass die Anordnung (2) einen einstückigen Rahmen (8), welcher insbesondere als Schweißbaugruppe ausgebildet ist, aufweist, wobei der Rahmen (8) dazu eingerichtet ist, eine mit der Anordnung (2) verbundene Abferkelbucht (100) zu stabilisieren.

## Beschreibung

Die Erfindung betrifft eine Anordnung, insbesondere eine Ferkelschlupfeinrichtung, für eine Abferkelbucht.

Derartige Anordnungen, insbesondere Ferkelschlupfeinrichtungen, auch allgemein als "Ferkelschlupf" bezeichnet, sind aus dem Stand der Technik bekannt. Sie werden dazu verwendet, Ferkeln einen Durchtritt durch eine seitliche Stall- oder Buchtbegrenzung zu ermöglichen, insbesondere bei sogenannten Abferkelbuchten, in denen die Ferkel durch ein Muttertier gesäugt werden. Aus dem Stand der Technik vorbekannte Ferkelschlupfeinrichtungen sind zumeist in Form von schwenkbaren oder vertikal entnehmbaren Türelementen ausgebildet und werden typischerweise direkt mit den Seitenwänden einer Bucht verbunden oder in die Seitenwände eingelassen. Nachteilig wirkt sich jedoch aus, dass die Seitenwände hierdurch mitunter hohen mechanischen Belastungen ausgesetzt sind, was sich nachteilig auf die Stabilität der Seitenwände und der Buchtumfassung insgesamt auswirken kann. Darüber hinaus gestaltet sich die Integration derartiger Ferkelschlupfeinrichtungen in Bucht-Seitenwände gelegentlich als herausfordernd. Ein hoher Installationsaufwand ergibt sich insbesondere bei benachbart angeordneten Abferkelbuchten, wie sie bei sogenannten Gruppenabferkelsystemen verwendet werden. Bei derartigen Systemen ist jede einzelne Abferkelbucht mit einer separaten Ferkelschlupfeinrichtung auszustatten, um einen Zugang der Ferkel zu einem gemeinsamen Gruppenaufenthaltsbereich zu ermöglichen, womit ein hoher Installationsaufwand einhergehen kann.

Vor diesem Hintergrund lag der Erfindung die Aufgabe zugrunde, eine Anordnung der eingangs bezeichneten Art dahingehend weiterzubilden, dass die im Stand der Technik aufgefundenen Nachteile möglichst weitgehend behoben werden. Insbesondere war eine Anordnung anzugeben, die eine hohe Stabilität aufweist und darüber hinaus zu einer verbesserten Stabilität der Bucht insgesamt beiträgt. Darüber hinaus war eine kompakte und montagefreundliche Anordnung anzugeben.

Erfindungsgemäß wird die Aufgabe bei einer Anordnung der eingangs genannten Art dadurch gelöst, dass die Anordnung einen einstückigen Rahmen, welcher insbesondere als Schweißbaugruppe ausgebildet ist, aufweist, wobei der Rahmen dazu eingerichtet ist, eine mit der Anordnung verbundene Abferkelbucht zu stabilisieren.

Die Erfindung macht sich die Erkenntnis zunutze, dass durch das Vorsehen eines Rahmens eine besonders kompakte Baugruppe angegeben werden kann, wobei die Anordnung nicht nur selbst aufgrund der Rahmenkonstruktion eine hohe Stabilität aufweist, sondern auch dazu geeignet und eingerichtet ist, Seitenwänden der Abferkelbucht zusätzliche Stabilität zu verleihen. Erfindungsgemäß ist der Rahmen als einstückiges Bauteil, insbesondere als Schweißbaugruppe ausgebildet. Hierdurch wird die Stabilität der Baugruppe erhöht, die Anzahl der Teile insgesamt reduziert und eine einfache Montierbarkeit der betreffenden Anordnung erreicht.

Gemäß einer Ausführungsform weist die Anordnung ein Türelement auf, wobei das Türelement dazu eingerichtet ist, einen Durchgang für die Ferkel durch die Anordnung freizugeben oder zu verschließen, wobei das Türelement an dem Rahmen angeordnet ist und wenigstens seitlich und oberseitig von der Anordnung, insbesondere dem Rahmen, umfasst ist. Durch die Anordnung des Türelements an dem Rahmen wird die gewünschte Funktionalität eines "Ferkelschlupfes" bereitgestellt, das heißt, den Ferkeln wird bei geöffnetem Türelement ein Passieren durch den Rahmen und damit die Ferkelschlupfeinrichtung insgesamt ermöglicht.

Die Türelemente verbleiben vorzugsweise an der Halterung am Rahmen und geben den Weg für die Ferkel durch eine Veränderung der Position der Türelemente frei. Durch den Verbleib der Türelemente am Rahmen liegen keine losen oder entnehmbaren Elemente vor, welche einer gesonderten Halterung bedürfen, bspw. zum Zwecke der Aufbewahrung. Darüber hinaus enthält die Anordnung vorzugsweise auch keinerlei Elemente, welche die Tiere aus Ihren Halterungen herauslösen können. Darüber hinaus liegen auch keinerlei entnehmbare Elemente vor, welche anschließend wieder eingefädelt oder gekoppelt werden müssen, wodurch für das Bedienpersonal eine Zeitersparnis eintritt und eine raschere Rekonfiguration der Anordnung erreicht werden kann. Hierdurch wird insgesamt ein gutes Handling erreicht und eine Bedienbarkeit mit nur einer Hand sichergestellt. Vorteilhaft hat sich gezeigt, dass eine derartige Drehmechanik zur Veränderung der Position der Türelemente wenig anfällig ist für Blockierung durch im Stall übliche Verschmutzungen und ebenso wenig für ein Verkanten der Türelemente im Vergleich zu aus dem Stand der Technik bekannten Schieberlösungen, bei denen Türelemente als vertikal verschiebbare Schieber ausgebildet sind.

Der Rahmen ist insbesondere aus wenigstens drei Elementen zusammengesetzt, nämlich aus zwei Elementen, die sich im Wesentlichen vertikal und benachbart zu dem geschlossenen Türelement ausgehend von einem Boden des Stalls oder der Abferkelbucht bis zu einer Höhe erstrecken, die vorzugsweise höher ist als die Höhe des Türelements, sowie einem im Wesentlichen horizontal verlaufenden Rahmenelement, welches die vertikalen Rahmenelemente verbindet. Gemäß einer Ausführungsform ist die Anordnung als Ferkelschlupfeinrichtung ausgebildet.

Gemäß einer Ausführungsform weist der Rahmen ein erstes Rahmenelement auf, welches benachbart zu einer ersten Seite des Türelements angeordnet ist und sich vertikal erstreckt, wobei das Türelement mit seiner ersten Seite an dem ersten vertikalen Rahmenelement aufgenommen ist, insbesondere an wenigstens einer an dem vertikalen Rahmenelement angeordneten Türelement-Aufnahme. Gemäß einer Ausführungsform sind insgesamt zwei Türelement-Aufnahmen zur Aufnahme des Türelements vorgesehen, wobei die Türelement-Aufnahmen beabstandet voneinander und übereinander an dem ersten Rahmenelement angeordnet sind. Auf diese Weise wird eine sichere Führung des Türelements erreicht, sodass dieses in eine offene Position gebracht werden kann, in der ein Durchgang für die Ferkel durch die Ferkelschlupfeinrichtung freigegeben wird und in eine geschlossene Position, in der ein Durchgang für die Ferkel durch die Ferkelschlupfeinrichtung gesperrt ist.

Gemäß einer Ausführungsform weist der Rahmen ein zweites Rahmenelement auf, welches bei geschlossenem Türelement benachbart zu einer dem ersten Rahmenelement abgewandten Seite des Türelements angeordnet ist und sich vertikal erstreckt, wobei das zweite Rahmenelement eine Buchtumrandung ausbildet, welche dazu eingerichtet ist, eine Seitenwand der Abferkelbucht abschnittsweise zu umfassen.

Durch die Umfassung der Seitenwand der Abferkelbucht kann die Stabilität der Anordnung, insbesondere des Rahmens derselben, besonders vorteilhaft auch auf die Seitenwand der Abferkelbucht übertragen werden. Somit kann die Seitenwand von der hohen Eigenstabilität der Rahmenkonstruktion der Anordnung profitieren, indem die Buchtumrandung die Seitenwand der Abferkelbucht abschnittsweise umfasst. Darüber hinaus kann auf diese Weise eine besonders einfache Integration der Anordnung in die Abferkelbucht erfolgen. Es sind lediglich die Seitenwände der Abferkelbucht geeignet abzulängen, wobei dann das der Abferkelbucht zugewandte Ende der Buchtumrandung von der Buchtumrandung zumindest teilweise aufgenommen wird. Selbst bei auf die Seitenwand einwirkenden Kräften kann somit eine besonders stabile Konfiguration der Bucht erreicht werden.

Gemäß einer Ausführungsform ist die Buchtumrandung als U-Profil ausgebildet. Die Breite des U-Profils kann dabei korrespondierend mit einer Dicke der Seitenwand gewählt werden, sodass die Seitenwand in das U-Profil eingeführt werden kann und gleichzeitig eine einfache Montierbarkeit ermöglicht wird. Die Seitenwand kann sodann mit der Buchtumrandung auf geeignete Weise verbunden werden, beispielsweise mittels Verschraubungen.

Gemäß einer Ausführungsform weisen die Rahmenelemente unterseitig Befestigungsmittel auf, welche dazu eingerichtet sind, die Rahmenelemente mit einem darunterliegenden Boden zu verbinden. Auf diese Weise kann die Anordnung sicher mit dem Stallboden verbunden werden, beispielsweise verschraubt werden, womit im Bereich der Anordnung auftretende Kräfte auf den Boden übertragen werden können. Hierdurch wird auch der Seitenwand, die von der Anordnung abschnittsweise aufgenommen ist, zusätzliche Stabilität verliehen.

Gemäß einer Ausführungsform ist das Türelement ein erstes Türelement, wobei die Anordnung ein zweites Türelement aufweist, welches an dem ersten Rahmenelement angeordnet ist, insbesondere mit einer ersten Seite des Türelements an einer zweiten an dem ersten vertikalen Rahmenelement angeordneten Türelement-Aufnahme. Vorzugsweise sind auch hier zwei Türelement-Aufnahmen vertikal voneinander beabstandet übereinander angeordnet. Mit anderen Worten sind also gemäß dieser Ausführungsform zwei Türelemente an dem ersten Rahmenelement angeordnet, und zwar in einer durch den Rahmen aufgespannten Rahmenebene benachbart zueinander, bezugnehmend auf den geschlossenen Zustand der Türelemente. Die Anordnung kann somit dazu verwendet werden, für zwei benachbarte Buchten jeweils einen entsprechenden Ferkelschlupf bereitzustellen, wobei in diesem Fall die erste Tür der ersten Bucht zugeordnet ist und die zweite Tür der zweiten Bucht. Hierbei ist nur eine Ferkelschlupfeinrichtung zu montieren, die gleichzeitig eine hohe Stabilität aufweist.

Gemäß einer Ausführungsform weist der Rahmen ein drittes Rahmenelement auf, welches in einer gemeinsamen Rahmenebene mit dem ersten Rahmenelement und dem zweiten Rahmenelement liegt und benachbart zu einer dem ersten Rahmenelement abgewandten zweiten Seite des zweiten Türelements angeordnet ist und sich vertikal erstreckt, wobei das dritte Rahmenelement eine Buchtumrandung ausbildet, welche dazu eingerichtet ist, eine Seitenwand der Abferkelbucht abschnittsweise zu umfassen.

Gemäß dieser Ausführungsform umfasst der Rahmen zwei Türelemente seitlich und erstreckt sich zwischen den Türelementen. Die drei Rahmenelemente bilden dabei einen Rahmen aus, der einstückig ausgebildet ist, insbesondere als Schweißbaugruppe. Auch das dritte Rahmenelement ermöglichst es, einen Teil einer Seitenwand der Abferkelbucht zu umfassen. Auf diese Weise können an beiden Seiten der Anordnung entsprechende Seitenwände mit der Anordnung verbunden werden, wobei die Anordnung selbst eine hohe Stabilität aufweist und diese Stabilität aufgrund der rahmenförmigen Bauweise und der Verankerung im Stallboden auch auf die entsprechenden verbundenen Seitenwände überträgt.

Gemäß einer Ausführungsform weist das erste Rahmenelement eine weitere Buchtumrandung auf, welche dazu eingerichtet ist, eine zwischen den Türelementen und quer zu einer Rahmenebene verlaufende Seitenwand der Abferkelbucht abschnittsweise zu umfassen. Auf diese Weise können nicht nur zu den Türelementen bzw. der Ferkelschlupfeinrichtung benachbart angeordnete Seitenwände mit der Anordnung verbunden werden, sondern auch eine quer zur Rahmenebene verlaufende Seitenwand, die beispielsweise benachbarte Abferkelbuchten voneinander trennt. Auch dieser quer zur Rahmenebene verlaufenden Seitenwand kann die entsprechende Anordnung zusätzliche Stabilität verleihen. Darüber hinaus kann eine Anordnung zur Bereitstellung von Zugängen zu zwei benachbarten Buchten verwendet werden.

Gemäß einer Ausführungsform weist der Rahmen ein oberseitiges Rahmenelement auf, welches sich horizontal erstreckt und das erste Rahmenelement mit dem zweiten oder dem dritten Rahmenelement verbindet, insbesondere, wobei das oberseitige Rahmenelement oberhalb des wenigstens einen Türelements angeordnet ist. Durch das oberseitige Rahmenelement wird die Stabilität des Rahmens der Anordnung insgesamt erhöht.

Gemäß einer Ausführungsform ist das oberseitige Rahmenelement ein erstes oberseitiges Rahmenelement, wobei der Rahmen ein zweites oberseitiges Rahmenelement aufweist, welches sich horizontal erstreckt und das erste Rahmenelement mit dem zweiten oder dem dritten Rahmenelement verbindet, wobei das zweite oberseitige Rahmenelement parallel zu dem ersten oberseitigen Rahmenelement in einem Überdeckungsbereich zu dem wenigstens einen Türelement angeordnet ist. Durch das Vorsehen von zwei vorzugsweise parallelen oberseitigen Rahmenelementen kann die Stabilität des Rahmens weiter erhöht werden. Das zweite oberseitige Rahmenelement kann darüber hinaus als Anschlag für die Türelemente fungieren, sodass deren Bewegungsbereich einseitig begrenzt ist. Beispielsweise kann vorgesehen sein, dass sich die Türelemente lediglich in Richtung einer Innenseite der Abferkelbucht öffnen, nicht jedoch nach außen.

Gemäß einer Ausführungsform ist die Anordnung für eine ungerade Anzahl an nebeneinander angeordneten Abferkelbuchten ausgebildet, wobei die Anordnung nur ein Türelement aufweist, welches von dem Rahmen umfasst ist. Der Rahmen ist damit im Vergleich zu Anordnungen mit zwei Türelementen gewissermaßen als "halbierter" Rahmen ausgebildet. Eine derartige Bauart ist besonders vorteilhaft für eine ungerade Anzahl Abferkelbuchten in einer Reihe.

Gemäß einer Ausführungsform weist die Anordnung wenigstens einen, insbesondere mehrere Abliegebügel auf, wobei der wenigstens eine Abliegebügel an dem Rahmen angeordnet ist, insbesondere wobei der Abliegebügel gegenüberliegend von einem Schwenkbereich der Türelemente am Rahmen angeordnet ist. Abliegebügel dienen dem Schutz der Ferkel vor dem Einwirken von Kräften durch die sich in einem Außenbereich der Abferkelbuchten befindenden Sauen. Darüber hinaus wird durch die Abliegebügel verhindert, dass sich die Sau vor die Anordnung legen kann und einen Zugang zu derselben blockiert. Vorzugsweise sind die Abliegebügel gegenüberliegend von einem Schwenkbereich der Türelemente an dem Rahmen angeordnet. Wenn sich also beispielsweise die Türelemente nach innen in Richtung der Abferkelbucht öffnen, dann sind die Abliegebügel vorzugsweise in einem hiervon gegenüberliegenden Bereich angeordnet, also außerhalb der Abferkelbucht, beispielsweise in einem Stallraum, der von mehreren Abferkelbuchten aus zugänglich ist.

Gemäß einer Ausführungsform ist dem ersten Rahmenelement und/oder dem zweiten Rahmenelement und/oder dem dritten Rahmenelement jeweils ein Abliegebügel zugeordnet. Vorzugsweise ist allen drei Rahmenelementen jeweils ein Abliegebügel zugeordnet. Auf diese Weise kann sichergestellt werden, dass Ferkel vor dem Einwirken von mechanischen Kräften durch die Sauen geschützt werden und darüber hinaus ein Zugang zu der Anordnung stets frei bleibt.

Gemäß einer Ausführungsform besteht der Rahmen aus wenigstens einem der folgenden Materialien oder weist diese auf: verzinktes oder galvanisiertes Material, Edelstahl, Guss, Kunststoff. Die Erfindung ist jedoch nicht auf die genannten Materialen beschränkt. Vielmehr wählt der Fachmann für einen gewünschten Einsatzzweck ein geeignetes Material aus. Durch die genannten Materialien kann eine besonders hohe Haltbarkeit des Rahmens und der Anordnung insgesamt erreicht werden.

Die Erfindung ist vorstehend unter Bezugnahme auf eine Anordnung beschrieben worden. In einem weiteren Aspekt betrifft die Erfindung eine Abferkelbucht mit wenigstens einer Seitenwand zur Einfassung der Abferkelbucht, und einer Anordnung, wobei die Seitenwand mit der Anordnung verbunden ist. Die Erfindung löst die eingangs bezeichnete Aufgabe in Bezug auf die Abferkelbucht, indem die Anordnung nach einem der vorstehenden Ausführungsbeispiele ausgebildet ist. Die Abferkelbucht macht sich die gleichen Vorteile und bevorzugten Ausführungsformen zunutze wie die erfindungsgemäße Anordnung und umgekehrt. Diesbezüglich wird auf die obigen Ausführungen verwiesen und deren Inhalt hier mit einbezogen.

Zusammengefasst weist die Abferkelbucht durch die Rahmenkonstruktion selbst eine hohe Stabilität auf. Durch die Aufnahme von Seitenwänden der Buchtumrandung verleiht die Anordnung auch der Abferkelbuchtumrandung Stabilität. Sie stellt durch die Aufnahme der Ferkeltür einen "Ferkelschlupf" bereit und darüber hinaus durch die Integration eines Abliegebügels einen Schutz für die Ferkel vor der Einwirkung von Kräften durch die Sau. Ferner wird verhindert, dass sich die Sau vor eine Ferkelschlupfeinrichtung legen kann und somit ein Zugang für die Ferkel frei bleibt. Der Abliegebügel schützt die Ferkel gegen Erdrücken und unterstützt die Sauen bei der Ausübung Ihres Abliegeverhaltens. Die Sau gleitet entlang eines schrägen Rohrs des Abliegebügels und die Krafteinwirkung auf den Ferkelschlupf wird somit reduziert.

Die Erfindung wird nachfolgend anhand eines bevorzugten Ausführungsbeispiels unter Bezugnahme auf die beigefügten Figuren näher beschrieben. Hierbei zeigen:
- Fig. 1: ein Ausführungsbeispiel einer erfindungsgemäßen Ferkelschlupfeinrichtung in einer perspektivischen Darstellung;
- Fig. 2: das Ausführungsbeispiel der erfindungsgemäßen Ferkelschlupfeinrichtung gemäß Fig. 1 in einer Seitenansicht;
- Fig. 3: einen Rahmen der erfindungsgemäßen Ferkelschlupfeinrichtung gemäß den Fig. 1 und 2 in einer perspektivischen Darstellung;
- Fig. 4: den Rahmen gemäß Fig. 3 in einer Seitenansicht;
- Fig. 5: ein erstes Ausführungsbeispiel einer erfindungsgemäßen Abferkelbucht in einer perspektivischen Ansicht;
- Fig. 6: ein zweites Ausführungsbeispiel einer erfindungsgemäßen Abferkelbucht in einer perspektivischen Ansicht;
- Fig. 7: ein drittes Ausführungsbeispiel einer erfindungsgemäßen Ferkelschlupfeinrichtung in einer perspektivischen Darstellung;
- Fig. 8: das Ausführungsbeispiel der erfindungsgemäßen Ferkelschlupfeinrichtung gemäß Fig. 7 in einer Seitenansicht;
- Fig. 9: ein drittes Ausführungsbeispiel einer erfindungsgemäßen Abferkelbucht in einer perspektivischen Ansicht; und
- Fig. 10: ein viertes Ausführungsbeispiel einer erfindungsgemäßen Abferkelbucht in einer perspektivischen Ansicht.

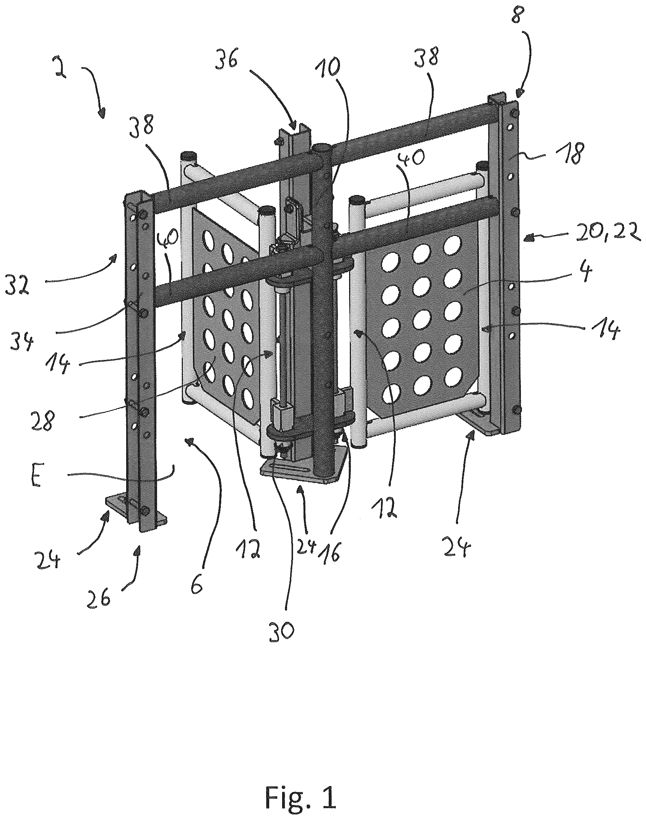

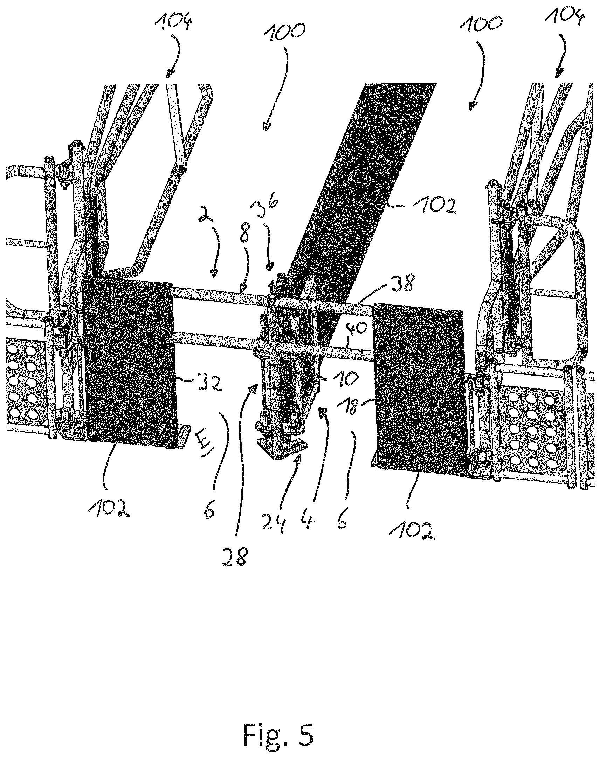

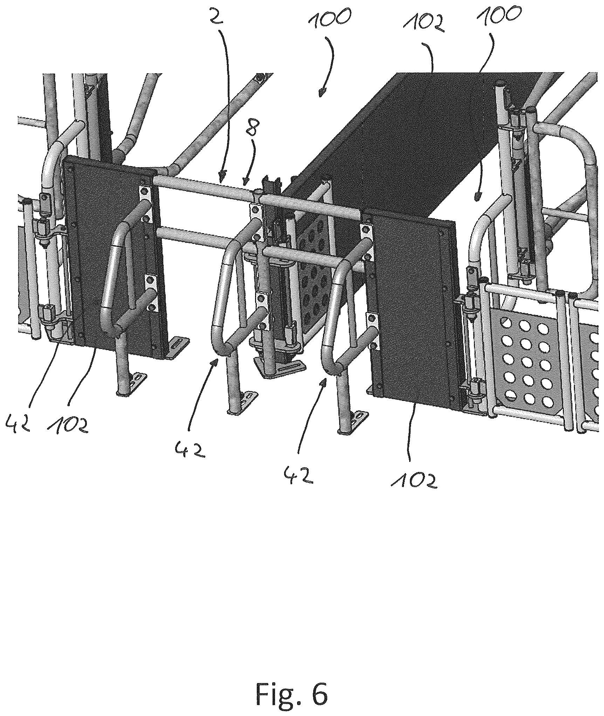

Die Fig. 1 bis 4 zeigen ein Ausführungsbeispiel einer erfindungsgemäßen Anordnung 2, die als Ferkelschlupfeinrichtung 2 ausgebildet ist. Die Ferkelschlupfeinrichtung 2 weist ein erstes Türelement 4 auf. Das erste Türelement 4 ist dazu eingerichtet, einen Durchgang 6 für die Ferkel durch die Ferkelschlupfeinrichtung 2 freizugeben oder zu verschließen. Insbesondere ist das erste Türelement 4 derartig in eine in den Fig. 5 und 6 näher gezeigte Abferkelbucht 100 integriert, dass ein Durchgang 6 für die Ferkel zu einer Abferkelbucht 100 freigegeben wird. Die Ferkelschlupfeinrichtung 2 weist einen Rahmen 8 auf, welcher das erste Türelement 4 seitlich und oberseitig umfasst, wobei das Türelement 4 an dem Rahmen angeordnet ist. Der Rahmen 8 weist ein erstes Rahmenelement 10 auf. Das erste Rahmenelement 10 ist benachbart zu einer ersten Seite 12 des ersten Türelements 4 angeordnet. Das erste Rahmenelement 10 erstreckt sich vertikal oder im Wesentlichen vertikal, wobei hiervon Abweichungen um +/- 20° von der Vertikalrichtung umfasst sind. Das erste Türelement 4 ist an dem ersten vertikalen Rahmenelement 10 aufgenommen, insbesondere an zwei an dem vertikalen Rahmenelement 10 vertikal beabstandet voneinander angeordneten Türelement-Aufnahmen 16.

Der Rahmen 8 weist ein zweites Rahmenelement 18 auf. Das zweite Rahmenelement 18 ist benachbart zu einer zweiten Seite 14 des Türelements 4 angeordnet und erstreckt sich vertikal oder im Wesentlichen vertikal. Die zweite Seite 14 des ersten Türelements 4 liegt der ersten Seite 12 gegenüber. Das zweite Rahmenelement 18 bildet eine Buchtumrandung 20 aus. Die Buchtumrandung 20 ist dazu eingerichtet, eine Seitenwand 102 der Abferkelbucht 100 abschnittsweise zu umfassen. Wie in den Fig. 1 bis 4 gezeigt ist, sind im Bereich der Buchtumrandung 20 Bohrungen eingebracht, welche eine Durchführung von Schrauben ermöglichen, um eine Seitenwand 102 der Abferkelbucht 100 mit der Buchtumrandung 20 zu verbinden, insbesondere zu verschrauben. Die Buchtumrandung 20 ist als U-Profil ausgebildet, wobei die Breite des U-Profils angepasst ist an eine Dicke der Seitenwand 102.

Der Rahmen 8 ist als einstückiges Bauteil, insbesondere als Schweißbaugruppe ausgebildet. Auf diese Weise lässt sich der Rahmen 8 besonders einfach montieren und weist eine hohe statische Stabilität auf. Die Ferkelschlupfeinrichtung 2 weist ein zweites Türelement 28 auf. Das zweite Türelement 28 ist an dem ersten Rahmenelement 10 angeordnet. Das zweite Türelement 28 ist an dem ersten Rahmenelement mittels zweier Türelement-Aufnahmen 30 angeordnet. Die Türelement-Aufnahmen 30 sind vertikal voneinander beabstandet. Der Rahmen 8 weist ein drittes Rahmenelement 32 auf. Das dritte Rahmenelement 32 ist benachbart zu einer zweiten Seite 14 des zweiten Türelements 28 in einem geschlossenen Zustand desselben angeordnet. Das dritte Rahmenelement 32 erstreckt sich vertikal oder im Wesentlichen vertikal. Das dritte Rahmenelement 32 bildet eine Buchtumrandung 34 aus. Die Buchtumrandung 34 ist dazu eingerichtet, eine Seitenwand 102 der Abferkelbucht 100 abschnittsweise zu umfassen. Die Rahmenelemente 10, 18, 32 weisen unterseitig Befestigungsmittel 24 auf. Die Rahmenelemente 10, 18, 32 sind auf einer gemeinsamen Ebene E angeordnet. Die Befestigungsmittel 24 sind dazu eingerichtet, die Rahmenelemente 10, 18, 32 mit einem darunterliegenden Boden 26 zu verbinden. Wie insbesondere in Fig. 1 erkennbar ist, weist das erste Rahmenelement 10 eine weitere Buchtumrandung 36 auf. Die weitere Buchtumrandung 36 ist dazu eingerichtet, eine zwischen den Türelementen 4, 28 und quer zu einer Rahmenebene E verlaufende Seitenwand 102 der Abferkelbucht 100 abschnittsweise zu umfassen, wie insbesondere in den Fig. 5 und 6 verdeutlicht wird.

Der Rahmen 8 weist darüber hinaus ein erstes oberseitiges Rahmenelement 38 und ein zweites oberseitiges Rahmenelement 40 auf. Das erste oberseitige Rahmenelement 38 erstreckt sich horizontal und verbindet das erste Rahmenelement 10 mit dem zweiten oder dem dritten Rahmenelement 18, 32. Insbesondere ist jeweils zwischen dem ersten Rahmenelement 10 und dem zweiten Rahmenelement 18 und zwischen dem ersten Rahmenelement 10 und dem dritten Rahmenelement 32 ein oberseitiges Rahmenelement 38 angeordnet. Selbiges gilt für die zweiten oberseitigen Rahmenelemente 40. Das erste oberseitige Rahmenelement 38 ist oberhalb der Türelemente 4, 28 angeordnet. Das zweite oberseitige Rahmenelement 40 erstreckt sich horizontal. Es verbindet entweder das erste Rahmenelement 10 mit dem zweiten Rahmenelement 18 oder das erste Rahmenelement 10 mit dem dritten Rahmenelement 32. Insbesondere sind zwei dieser zweiten oberseitigen Rahmenelemente 40 vorgesehen. Das zweite oberseitige Rahmenelement 40 ist jeweils parallel zu dem ersten oberseitigen Rahmenelement 38 angeordnet. Das zweite oberseitige Rahmenelement 40 ist jeweils in einem Überdeckungsbereich zu den Türelementen 4, 28 angeordnet.

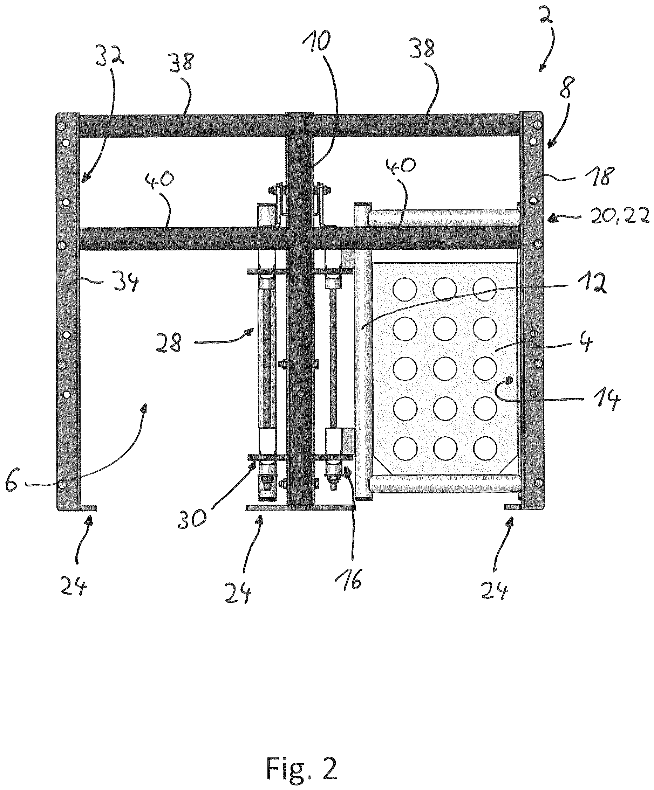

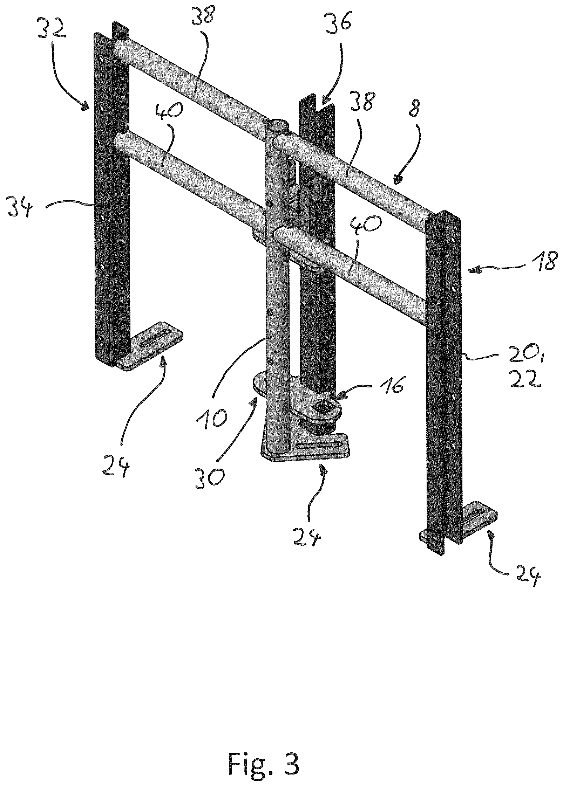

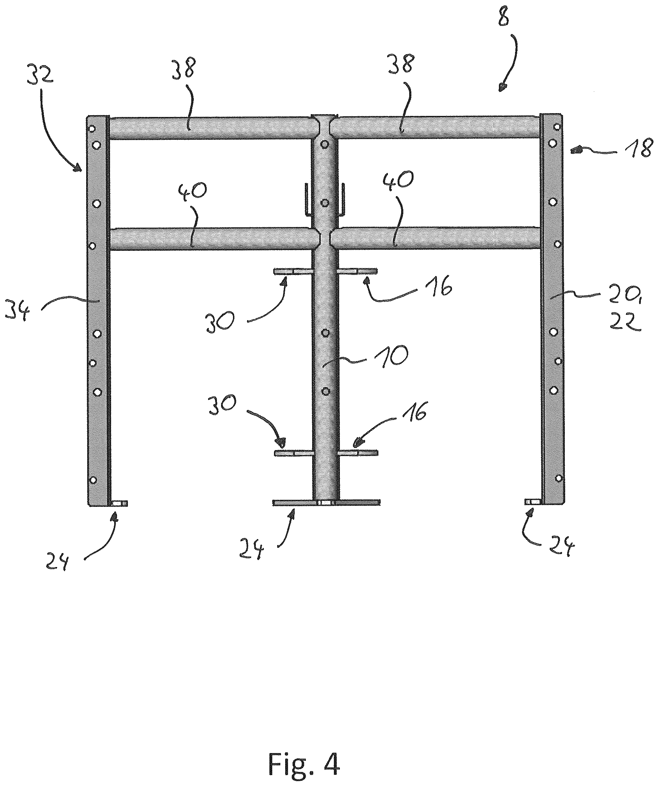

In den Fig. 3 und 4 ist der Rahmen 8, der dem Rahmen 8 der Fig. 1 und 2 entspricht, frei von Anbauteilen dargestellt. Fig. 5 zeigt zwei benachbart zueinander angeordnete Abferkelbuchten 100. Die Abferkelbuchten 100 sind von einer Seitenwand 102 getrennt und eingefasst. Die beiden benachbarten Abferkelbuchten 100 weisen eine gemeinsame Ferkelschlupfeinrichtung 2 auf, wobei jeder der Abferkelbuchten 100 ein Türelement 4, 28 zugeordnet ist. Die Ferkelschlupfeinrichtung 2 ist dabei über die weitere Buchtumrandung 36 mit der quer zur Rahmenebene E verlaufenden Seitenwand 102 verbunden. Darüber hinaus sind benachbart zu dem zweiten Rahmenelement 18 bzw. dem dritten Rahmenelement 32 jeweils Seitenwände 102 vorgesehen und mit den entsprechenden Rahmenelementen verbunden. Wenn sich die Türelemente 4, 28 in einem geöffneten Zustand befinden, wie in Fig. 5 dargestellt, so öffnen sich die Türelemente 4, 28 in Richtung eines Inneren der jeweiligen Abferkelbucht 100. Eine Öffnung nach außen wird durch die zweiten oberseitigen Rahmenelemente 40 verhindert. Innerhalb der jeweiligen Abferkelbuchten 100 sind Ferkelschutzeinrichtungen 104 angeordnet, die eine zeitweise Fixierung der Sau zum Zwecke des Ferkelschutzes ermöglichen.

In dem in der Fig. 6 gezeigten Ausführungsbeispiel weist die Ferkelschlupfeinrichtung 2 insgesamt drei Abliegebügel 42 auf. Die Abliegebügel 42 dienen als Schutz vor Erdrückungsverlusten bei den Ferkeln und verhindern, dass sich eine Sau, die sich außerhalb der Abferkelbucht 100 befindet, vor die Ferkelschlupfeinrichtung 2 legen kann, wodurch ein Zugang der Ferkel zu der Ferkelschlupfeinrichtung 2 verhindert wäre. Die Abliegebügel 42 sind an dem Rahmen 8 angeordnet. Insbesondere ist ein Abliegebügel 42 an dem ersten Rahmenelement 10 angeordnet, ein Abliegebügel 42 an dem zweiten Rahmenelement 18 und ein Abliegebügel an dem dritten Rahmenelement 32. Die Abliegebügel 42 befinden sich somit gegenüberliegend von einem Schwenkbereich der Türelemente 4, 28. Der Rahmen 8 kann insbesondere verzinkt oder galvanisiert ausgebildet sein.

Zusammengefasst ermöglicht die Ausbildung des Rahmens 8 als einstückiges Bauteil, insbesondere Schweißbaugruppe, eine Aufnahme der entsprechenden Seitenwände 102, um eine Stabilität der Abferkelbucht 100 zu erhöhen. Gleichzeitig können an dem Rahmen 8 ein Türelement 4 bzw. zwei Türelemente 4, 28 angeordnet werden, wodurch ein Zugang zu wenigstens einer Abferkelbucht 100, vorteilhafterweise jedoch zu benachbarten Abferkelbuchten 100 mittels einer einzigen Ferkelschlupfeinrichtung 2 freigegeben werden.

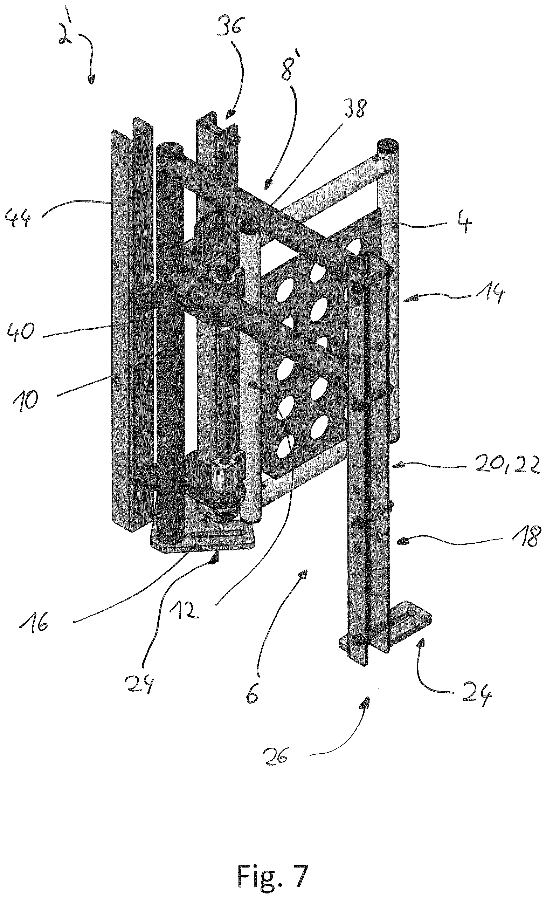

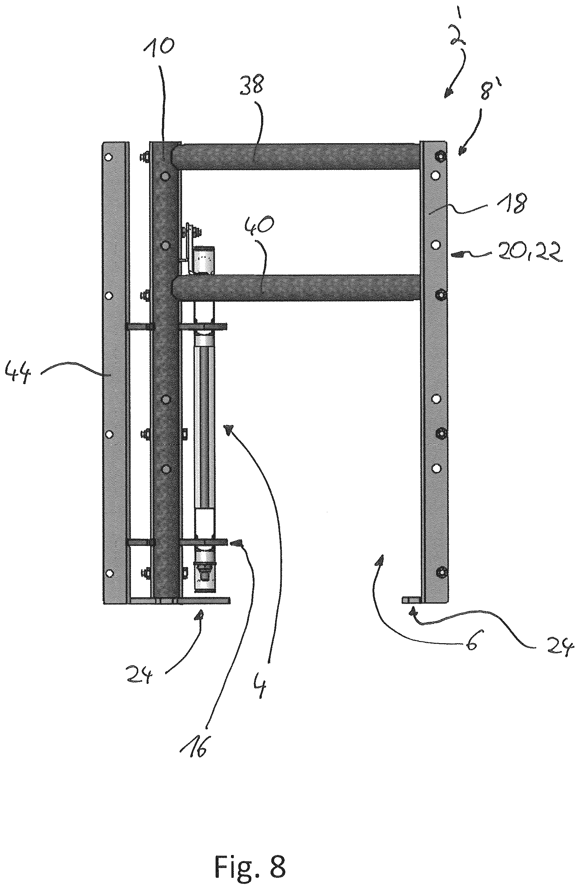

Die Figuren 7 und 8 zeigen ein alternatives Ausführungsbeispiel einer Anordnung 2`, welche als Ferkelschlupfeinrichtung 2' ausgebildet ist. Das in den Figuren 7 und 8 gezeigte Ausführungsbeispiel der Anordnung 2` eignet sich für eine ungerade Anzahl Abferkelbuchten 100.

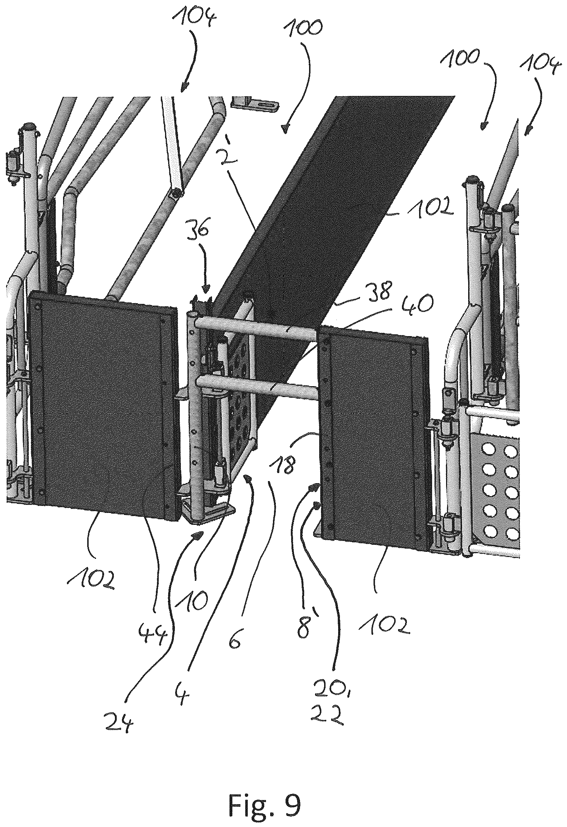

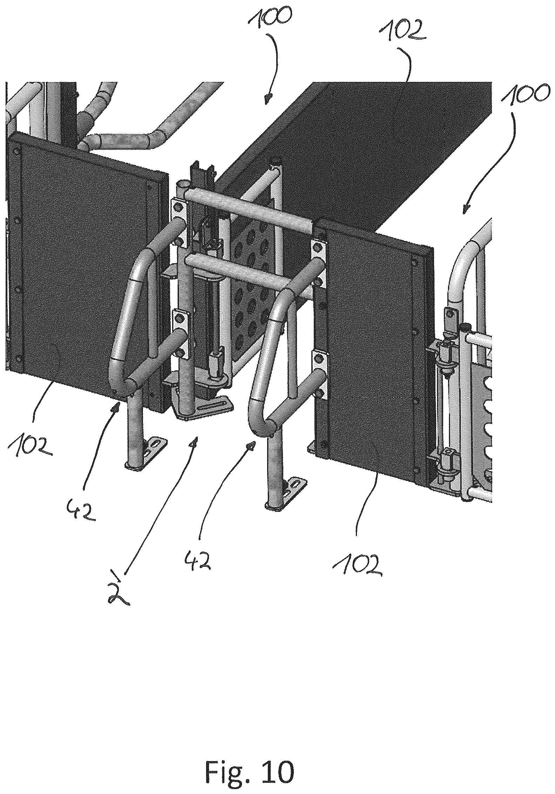

Die Ferkelschlupfeinrichtung 2` weist nur ein Türelement 4 auf. Das Türelement 4 ist dazu eingerichtet, einen Durchgang 6 für die Ferkel durch die Ferkelschlupfeinrichtung 2' freizugeben oder zu verschließen. Insbesondere ist das Türelement 4 derartig in eine in den Fig. 9 und 10 näher gezeigte Abferkelbucht 100 integriert, dass ein Durchgang 6 für die Ferkel zu einer Abferkelbucht 100 freigegeben wird. Die Ferkelschlupfeinrichtung 2` weist einen Rahmen 8' auf, welcher das Türelement 4 seitlich und oberseitig umfasst, wobei das Türelement 4 an dem Rahmen 8' angeordnet ist. Der Rahmen 8' weist ein erstes Rahmenelement 10 auf. Das erste Rahmenelement 10 ist benachbart zu einer ersten Seite 12 des Türelements 4 angeordnet. Das erste Rahmenelement 10 erstreckt sich vertikal oder im Wesentlichen vertikal, wobei hiervon Abweichungen um +/- 20° von der Vertikalrichtung umfasst sind. Das Türelement 4 ist an dem ersten vertikalen Rahmenelement 10 aufgenommen, insbesondere an zwei an dem vertikalen Rahmenelement 10 vertikal beabstandet voneinander angeordneten Türelement-Aufnahmen 16.

Der Rahmen 8' weist ein zweites Rahmenelement 18 auf. Das zweite Rahmenelement 18 ist benachbart zu einer zweiten Seite 14 des Türelements 4 angeordnet und erstreckt sich vertikal oder im Wesentlichen vertikal. Die zweite Seite 14 des Türelements 4 liegt der ersten Seite 12 gegenüber. Das zweite Rahmenelement 18 bildet eine Buchtumrandung 20 aus. Die Buchtumrandung 20 ist dazu eingerichtet, eine Seitenwand 102 der Abferkelbucht 100 abschnittsweise zu umfassen. Wie in Fig. 7 gezeigt ist, sind im Bereich der Buchtumrandung 20 Bohrungen eingebracht, welche eine Durchführung von Schrauben ermöglichen, um eine Seitenwand 102 der Abferkelbucht 100 mit der Buchtumrandung 20 zu verbinden, insbesondere zu verschrauben. Die Buchtumrandung 20 ist als U-Profil ausgebildet, wobei die Breite des U-Profils angepasst ist an eine Dicke der Seitenwand 102.

An dem ersten Rahmenelement 10 ist eine Buchtumrandung 44 angeordnet. Die Buchtumrandung 44 ist dazu eingerichtet, eine Seitenwand 102 der Abferkelbucht 100 abschnittsweise zu umfassen. Die Rahmenelemente 10, 18 weisen unterseitig Befestigungsmittel 24 auf. Die Rahmenelemente 10, 18 sind auf einer gemeinsamen Ebene E angeordnet. Die Befestigungsmittel 24 sind dazu eingerichtet, die Rahmenelemente 10, 18 mit einem darunterliegenden Boden 26 zu verbinden. Wie insbesondere in Fig. 7 erkennbar ist, weist das erste Rahmenelement 10 eine weitere Buchtumrandung 36 auf. Die weitere Buchtumrandung 36 ist dazu eingerichtet, eine quer zu einer Rahmenebene E verlaufende Seitenwand 102 der Abferkelbucht 100 abschnittsweise zu umfassen, wie insbesondere in den Fig. 9 und 10 verdeutlicht wird.

Der Rahmen 8' weist darüber hinaus ein erstes oberseitiges Rahmenelement 38 und ein zweites oberseitiges Rahmenelement 40 auf. Das erste oberseitige Rahmenelement 38 erstreckt sich horizontal und verbindet das erste Rahmenelement 10 mit dem zweiten Rahmenelement 18. Das erste oberseitige Rahmenelement 38 ist oberhalb des Türelements 4 angeordnet. Das zweite oberseitige Rahmenelement 40 erstreckt sich horizontal. Es verbindet das erste Rahmenelement 10 mit dem zweiten Rahmenelement 18. Das zweite oberseitige Rahmenelement 40 ist parallel zu dem ersten oberseitigen Rahmenelement 38 angeordnet. Der Rahmen 8' ist als einstückiges Bauteil, insbesondere als Schweißbaugruppe ausgebildet. Auf diese Weise lässt sich der Rahmen 8' besonders einfach montieren und weist eine hohe statische Stabilität auf.

Fig. 9 zeigt zwei benachbart zueinander angeordnete Abferkelbuchten 100. Die Abferkelbuchten 100 sind von einer Seitenwand 102 getrennt und eingefasst. Die rechts dargestellte Abferkelbucht 100 weist eine Ferkelschlupfeinrichtung 2' auf. Die Ferkelschlupfeinrichtung 2` ist dabei über die weitere Buchtumrandung 36 mit der quer zur Rahmenebene E verlaufenden Seitenwand 102 verbunden. Darüber hinaus sind benachbart zu dem zweiten Rahmenelement 18 bzw. dem ersten Rahmenelement 10 jeweils Seitenwände 102 vorgesehen und mit den entsprechenden Rahmenelementen verbunden.

In dem in der Fig. 10 gezeigten Ausführungsbeispiel weist die Ferkelschlupfeinrichtung 2` insgesamt zwei Abliegebügel 42 auf. Die Abliegebügel 42 sind an dem Rahmen 8' angeordnet. Insbesondere ist ein Abliegebügel 42 an dem ersten Rahmenelement 10 angeordnet und ein Abliegebügel 42 an dem zweiten Rahmenelement 18.

### Bezugszeichenliste

- 2, 2': Anordnung / Ferkelschlupfeinrichtung
- 4: erstes Türelement
- 6: Durchgang
- 8, 8': Rahmen
- 10: erstes Rahmenelement
- 12: erste Seite des Türelements
- 14: zweite Seite des Türelements
- 16: erste Türelement-Aufnahme
- 18: zweites Rahmenelement
- 20: Buchtumrandung des zweiten Rahmenelements
- 22: U-Profil
- 24: Befestigungsmittel
- 26: Boden
- 28: zweites Türelement
- 30: zweite Türelement-Aufnahme
- 32: drittes Rahmenelement
- 34: Buchtumrandung des dritten Rahmenelements
- 36: weitere Buchtumrandung
- 38: erstes oberseitiges Rahmenelement
- 40: zweites oberseitiges Rahmenelement
- 42: Abliegebügel
- 44: Buchtumrandung
- 100: Abferkelbucht
- 102: Seitenwand
- 104: Ferkelschutzeinrichtung
- E: Rahmenebene

## Patentansprüche

1. Anordnung (2), insbesondere Ferkelschlupfeinrichtung (2), für mindestens eine Abferkelbucht (100),
**dadurch gekennzeichnet, dass** die Anordnung (2) einen einstückigen Rahmen (8), welcher insbesondere als Schweißbaugruppe ausgebildet ist, aufweist, wobei der Rahmen (8) dazu eingerichtet ist, eine mit der Anordnung (2) verbundene Abferkelbucht (100) zu stabilisieren.

2. Anordnung nach Anspruch 1,
mit einem Türelement (4), wobei das Türelement (4) dazu eingerichtet ist, einen Durchgang (6) für die Ferkel durch die Anordnung (2) freizugeben oder zu verschließen, wobei das Türelement (4) an dem Rahmen (8) angeordnet ist und wenigstens seitlich und oberseitig von der Anordnung (2), insbesondere dem Rahmen (8), umfasst ist.

3. Anordnung (2) nach Anspruch 1 oder 2,
wobei der Rahmen (8) ein erstes Rahmenelement (10) aufweist, welches benachbart zu einer ersten Seite (12) des Türelements (4) angeordnet ist und sich vertikal erstreckt, wobei das Türelement (4) mit seiner ersten Seite (12) an dem ersten vertikalen Rahmenelement (10) aufgenommen ist, insbesondere an wenigstens einer an dem vertikalen Rahmenelement (10) angeordneten Türelement-Aufnahme (16).

4. Anordnung (2) nach einem der vorstehenden Ansprüche,
wobei der Rahmen (8) ein zweites Rahmenelement (18) aufweist, welches bei geschlossenem Türelement (4) benachbart zu einer dem ersten Rahmenelement (10) abgewandten zweiten Seite (14) des Türelements (4) angeordnet ist und sich vertikal erstreckt, wobei das zweite Rahmenelement (18) eine Buchtumrandung (20) ausbildet, welche dazu eingerichtet ist, eine Seitenwand (102) der Abferkelbucht (100) abschnittsweise zu umfassen.

5. Anordnung (2) nach Anspruch 4,
wobei die Buchtumrandung (20) als U-Profil ausgebildet ist.

6. Anordnung (2) nach einem der Ansprüche 3 bis 5,
wobei die Rahmenelemente (10, 18) wenigstens ein unterseitiges Befestigungsmittel (24) aufweisen, welches dazu eingerichtet ist, die Rahmenelemente (10, 18, 32) mit einem darunterliegenden Boden (26) zu verbinden.

7. Anordnung (2) nach einem der Ansprüche 3 bis 6,
wobei das Türelement (4) ein erstes Türelement (4) ist und wobei die Anordnung (2) ein zweites Türelement (28) aufweist, welches mit einer ersten Seite (12) an dem ersten Rahmenelement (10) angeordnet ist.

8. Anordnung (2) nach Anspruch 7,
wobei der Rahmen (8) ein drittes Rahmenelement (32) aufweist, welches in einer gemeinsamen Rahmenebene (E) mit dem ersten Rahmenelement (10) und dem zweiten Rahmenelement (18) liegt und welches benachbart zu einer bei geschlossenem zweiten Türelement (28) dem ersten Rahmenelement (10) abgewandten zweiten Seite (14) des zweiten Türelements (28) angeordnet ist und sich vertikal erstreckt, wobei das dritte Rahmenelement (32) eine Buchtumrandung (34) ausbildet, welche dazu eingerichtet ist, eine Seitenwand (102) der Abferkelbucht (100) abschnittsweise zu umfassen.

9. Anordnung (2) nach einem der vorstehenden Ansprüche,
wobei das erstes Rahmenelement (10) eine weitere Buchtumrandung (36) aufweist, welche dazu eingerichtet ist, eine zwischen den Türelementen (4, 28) und quer zu einer Rahmenebene (E) verlaufende Seitenwand (102) der Abferkelbucht (100) abschnittsweise zu umfassen.

10. Anordnung (2) nach einem der vorstehenden Ansprüche,
wobei der Rahmen (8) ein oberseitiges Rahmenelement (38) aufweist, welches sich horizontal erstreckt und das erste Rahmenelement (10) mit dem zweiten oder dem dritten Rahmenelement (18, 32) verbindet, insbesondere wobei das oberseitige Rahmenelement (38) oberhalb des wenigstens einen Türelements (4, 28) angeordnet ist.

11. Anordnung (2) nach Anspruch 10,
wobei das oberseitige Rahmenelement (38) ein erstes oberseitiges Rahmenelement (38) ist und wobei der Rahmen (8) ein zweites oberseitiges Rahmenelement (40) aufweist, welches sich horizontal erstreckt und das erste Rahmenelement (10) mit dem zweiten oder dem dritten Rahmenelement (18, 32) verbindet, wobei das zweite oberseitige Rahmenelement (40) parallel zu dem ersten oberseitigen Rahmenelement (38) in einem Überdeckungsbereich zu dem wenigstens einen Türelement (4, 28) angeordnet ist.

12. Anordnung (2) nach Anspruch 1 oder 2 für eine ungerade Anzahl an nebeneinander angeordneten Abferkelbuchten (100), wobei die Anordnung (2) nur ein Türelement aufweist, welches von dem Rahmen (8) umfasst ist.

13. Anordnung (2) nach einem der vorstehenden Ansprüche,
wobei die Anordnung (2) wenigstens einen, insbesondere mehrere Abliegebügel (42) aufweist, und wobei der wenigstens eine Abliegebügel (42) an dem Rahmen (8) angeordnet ist, insbesondere wobei der Abliegebügel (42) gegenüberliegend von einem Schwenkbereich der Türelemente (4, 28) an dem Rahmen (8) angeordnet ist.

14. Anordnung (2) nach Anspruch 13,
wobei dem ersten Rahmenelement (10) und/oder dem zweiten Rahmenelement (18) und/oder dem dritten Rahmenelement (32) jeweils ein Abliegebügel (42) zugeordnet ist, und/oder wobei der Rahmen (8) aus wenigstens einem der folgenden Materialien besteht oder diese aufweist:
- verzinktes oder galvanisiertes Material,
- Edelstahl,
- Guss,
- Kunststoff.

15. Abferkelbucht (100) mit wenigstens einer Seitenwand (102) zur Einfassung der Abferkelbucht (100), und einer Anordnung (2), wobei die Seitenwand (102) mit der Ferkelschlupfeinrichtung (2) verbunden ist,
**dadurch gekennzeichnet, dass** die Anordnung (2) nach einem der vorstehenden Ansprüche ausgebildet ist.
